Europäisches Patentamt

European Patent Office

Office européen des brevets

(19)

(11) EP 0 942 527 A2

(12) **EUROPEAN PATENT APPLICATION**

(43) Date of publication:
    **15.09.1999 Bulletin 1999/37**

(51) Int Cl.$^6$: **H03G 3/30**

(21) Application number: **99104871.1**

(22) Date of filing: **11.03.1999**

(84) Designated Contracting States:
    **AT BE CH CY DE DK ES FI FR GB GR IE IT LI LU
    MC NL PT SE**
    Designated Extension States:
    **AL LT LV MK RO SI**

(30) Priority: **12.03.1998 IT GE980012**

(71) Applicant: **Balestra, Diego**
    **18100 Imperia (IT)**

(72) Inventor: **Balestra, Diego**
    **18100 Imperia (IT)**

(54) **Radiation shielding and power amplifier system and method for cellular phones**

(57)    A cellular telephone system comprising:

a) A final power amplifier at discrete levels for all temporal input channels, that in use amplifies the signal for each channel as a function of the electromagnetic signal received on the aerial through a regulator (R), which in use analyses the transmitter field and adjusts the power, in the way that in use the final power amplifier maintains the output signal of minor intensity in the transmitted band.

b) A transmission power amplifier which in use operates within the temporal devoted channels, such that the communication is maintained in reception/transmission at the lowest power level.

c) A metallic shield situated between the aerial and the earphone-microphone.

Fig 1

## Description

This patent relates to a cellular phone with a radiation shielding and power amplifier system which reduces the magnetic field a person is exposed to during a phone call using a cellular phone.

The strong development of radiomobile systems, both cellular and cordless phones, has made the need of reducing the radiofrequencies absorption in the human body more urgent. There is no accurate pattern of radio frequencies absorption in the human body, especially concerning the evaluation of the possible damages created by this absorption. Some preliminary tolerance limits have been defined.

The universally accepted parameter to express quantitatively the above mentioned limits is the Specific Absorption Rate (SAR):

$$SAR = d/dt \ (dW/dV) = A(E)(E) \ / \ b$$

where A = conductivity; b = density of the material entered by the electrical field; E = electrical field;

According to the SAR values the thermic modifications introduced into human tissues have been verified. It has been noticed that the circulatory activity of living tissues is able to neutralize high SAR values, although it isn't possible to balance the increase of the skin and tissues temperature in the first millimetres of skin near the speaker's ear, where most of the absorption from a mobile radio terminal takes place. There are other modifications, probably more dangerous, which are not yet well known, for instance athermical cancer modifications. Among the main examples we can recall the change in the $Ca^{++}$ ion transportation through the cellular membrane which has been noticed for SAR lower than 0.004 W/kg, or the eye lens denaturation and the cataphract configuration for SAR about 0,26 W/kg.

Concerning the emitted frequencies, it has to be noticed that cellular phones radio transmission frequencies are in a range between 1880-1900 MHZ and 935-960 MHZ or intermediate frequencies. Acceptable SARs values according to latest research, indicate that being the exposure to radiations emitted by portable terminals very localized ones, and especially located near brain tissues, it is necessary to consider the localized SAR maximum and not the average value distributed on the whole body.

There isn't a value which is univocally accepted by every standardisation organism of the world, but the more restrictive are of 1.6 watt/kg measured per average gram or 2 watt / kg measured per average 10 grams. Numerical simulations and experimental results on dummies built for this purpose have demonstrated that for GSM phones, such values are complied only if the telephone is held in the proper position and at least 1.4 cm from the head; due to the low emission-power involved, for DECT phones there is no special precaution, at least for a six minute conversation like the one generally considered in standards. Only 5-6% of mobile communications last more than this time at present. 30 minutes conversations, very seldom in cellular systems, but likely in DECT (whose statistics are approaching the fixed network ones), can significantly increase the absorbed electromagnetic power. Moreover, while in GSM it is possible to easily reach the security levels, in DECT higher margins of safety make the use of cordless systems safer for human health.

For protecting cellular phone users from harmful radiation emitted from the aerial, a suitable system known in the art is the introduction of a metallic shield between the aerial and the head of the person using the telephone. US5657386 discloses a cellular telephone which includes a shield which is fabricated of a plastic material having embedded carbon fibres for absorbing and dispersing electromagnetic radiation. A hinge is used to mount the shield to the housing, towards one end, for movement about an axis perpendicular to the aerial. The hinge permits movement of the shield along the axis so that the shield can be positioned directly between the aerial and the head of the person using the telephone. The system has been used for protecting cellular telephone users from harmful radiation emitted from aerial and is suitable for existing and newly constructed telephones. Since carbon fibre absorbs and disperses radiated energy, it is not necessary to ground shield, and it reduces the electromagnetic radiation striking the head by 70%.

The shield (10) of US5613221 includes a metal strip that is connected to the housing (14) of a cellular telephone (12) and located between the aerial rod (18) and the user. The strip has a flat body portion (24) that is adapted to be placed generally parallel to the aerial. The strip has an overall length that is slightly longer than the aerial rod. It reduces the amount of electromagnetic radiation that is emitted by the aerial rod and that reaches the region adjacent to the speaker.

In US5493704 protection means are associated with the radiating system (16) of a transmitter constituting a radiotelephone (4). The purpose of the protection means is to reduce the amount of radiation that is intercepted, i.e. the proportion of the emitted radiation (20) that is intercepted by the body of the user (2), so as to enable the overall power of the radiation to be increased. In accordance with the invention, said protection means including a casing (18) which ensures that safe distances (33, 34, 35) are maintained between the radiating system and the body of the user. The protection means further include a screen (6) that absorbs the radiation. The invention applies in particular to long range radiotelephones.

Although these shields absorb and reduce the harmful electromagnetic radiation, radiated energy emitted from the aerial and striking the head, equally affect the functionality and the range capacity of the cellular phone.

Mobile cellular phones comprise power control systems for adjusting the transmitter-power level of the transmitted signal from the mobile cellular phone.

EP855807 relates to a mobile station for use in a cellular communications network using spread spectrum modulation wherein a base station transmits spread spectrum signals which are received by the mobile station and the mobile station includes a transmitter and an associated aerial for transmitting spread spectrum signals to the base station. The mobile station includes an adaptive power control comprising: at least one circuit (for acquiring and decoding said spread spectrum signals from said base station; a detector coupled to one of said acquisition circuits for detecting a received power level of a generic spread spectrum signal transmitted by the base station; a decoder coupled to one of said acquisition circuits for decoding a threshold value of an APC data signal encoded within a spread spectrum signal transmitted by the base station; a differential amplifier coupled to said detector and said decoder for generating a comparison signal by comparing the received power level to said threshold value; and a variable gain device coupled to said differential amplifier and between the mobile station's transmitter and aerial, responsive to said comparison signal indicating an increase or decrease, for adjusting a transmitter power level of the transmitter spread spectrum signal from said mobile station transmitter.

The apparatus of EP684707 includes a base station with a number of RF transceivers, each for transmitting and receiving RF signals to and from an aerial array via respective transmit and receive paths for one or more calls. Each array includes individual transmit attenuation circuits and amplifier circuits for each call. A power detecting circuit is located near to the aerial and digital feedback circuit to control the attenuation circuit responsive to the detected output power. The station is operable on a frequency hopping basis with the frequency band divided into a number of sub bands. The amplifier circuits amplifying the output as a function of a frequency sub band. The system allows radiation at a constant maximum power level, fluctuation due to temperature etc. can be tolerated and lower power switches can be used.

The cellular communication system WO9838825 uses dynamic channel allocation and has base stations with a number of aerial feeding microcells. A mobile in another adjacent cell requires handover to the station with microcells. The new base station monitors the control channels of all mobile communications from each microcell aerial. Common control signals are transmitted through all microcells. The power levels detected from the mobile at each aerial are then used as the basis for assigning channels to the mobile on handover. Traffic channels are transmitted through the aerial from which the strongest mobile control signal was detected. The interference levels are also monitored.

The power control apparatus according EP 567638 provided on a mobile station in a cellular network has an AGC circuit to perform AGC on a signal received from a base station including a first spread spectrum signal and an interfering signal. A correlator dispreads the output of the AGC circuit. A received power level is generated from the received and dispread signals. A comparator compares this with a threshold level. The mobile station includes a transmitter transmitting a second spread spectrum signal.

A broadband cellular communication system disclosed in US5758090 groups available carrier frequencies into a number of groups, with the assignment of frequencies to groups being such that any one available frequency is only assigned to one group. The radial distance between the base station aerial and a particular mobile station within the cell is determined. The radial distance is used to determine which concentric ring, positioned about the base station aerial, the particular mobile stations is located within. A radio frequency is assigned to the particular mobile station communicating with a mobile station based upon which ring the mobile station is located within. The system is directed to maximise frequency reuse factor in broadband wireless communication systems without adversely affecting the number of mobile stations which may be active in cell, to reduce self interference effects in the system and to increase signal power or specific base to mobile radio links without adversely affecting other radio links in the cell.

In order not to go over the absorbed radiation security levels, the power emitted by a cellular phone according to the DECT standard is limited to 10-250 mWatt, while the power emitted by a cellular phone according to the GSM standard varies between a minimum of 2 Watt to a maximum of 5 Watt. These limits of the emitted power create the need of implementing new base stations which can cover the territory in a more detailed way. The area is divided in smaller cells and the number of base stations increases with the root of two. For the same reason, the standing costs and eventually the cost of every time unit of communication for the cellular phones increase.

A further problem noticed in utilizing cellular phones is the electromagnetic pollution among cellular phones using contiguous cells, so called co-channel interferences. This creates a limit for the frequencies re-utilization for areas situated near the transmission point. The present invention's purpose is to create a cellular phone which is able to:

decrease the electromagnetic power absorbed by the human body keeping the communication on;

decrease the co-channel interference, t. i. noise between adjacent micro-cells;

decrease the fixed installation costs by increasing the sizes of the microcells.

It is an object of the present invention to provide a cellular phone comprising: a final power amplifier at discrete levels for all temporal input channels, that in use amplifies the signal for each channel as a function of the electromagnetic signal received on the aerial through a regulator (R), which in use analyses the transmitter field and adjusts the power, in the way that in use the final power amplifier maintains the output signal of lower intensity in the assigned band; a transmission power amplifier which in use operates for the temporal devoted channels, such that the communication is maintained in reception/transmission at the lowest power level and a metallic shield situated between the aerial and the earphone-microphone.

The metallic shield situated between the aerial and the earphone-microphone are preferably a reflector aerial yegi, a panel, preferably at 180° in the aerial corner reflect, or a directive aerial with a field opposite at that generated by earphone-microphone, preferably a microstrip combined in the body of the telephone.

According to another preferred embodiment the metallic shield situated between the aerial and the earphone-microphone can be assembled inside a telephone-case which is applied to telephones without protection. The shield in use interposes between the aerial and the earphone-microphone. The metallic shield can be hinged on said telephone-case or can slide on guides arranged on said telephone-case.

The present invention foresees a method of reducing the absorption of the human body of electromagnetic power emitted during the communication in reception and transmission from a cellular telephone of the claim n. 1. The regulator (R) preferably tunes the amplification of each of the discrete levels of the temporal channels in output at different power-levels as a function of the signal received by the aerial.

According to another embodiment, the present invention foresees the use in a cellular telephone of the combination of a final power amplifier at discrete levels for all temporal input channels, that amplifies the signal for each channel as a function of the electromagnetic signal received on the aerial through a regulator (R), which analyses the transmitter field and adjusts the power, in the way that the final power amplifier maintains the output signal of lower intensity in the assigned band, with a transmission power amplifier which operates for the temporal devoted channels, such that the communication is maintained in reception/transmission at the lowest power level, with a metallic shield situated between the aerial and the earphone-microphone

This system reduces to the lowest admissible level the electromagnetic field irradiated toward the human body. In fact besides introducing the physic shield (between the head and the aerial) which limits the electromagnetic field, the system shield/power amplifier induces on the regulator a diminution of the transmission power (for the same distance to the base station), because the signal seen by the aerial increases due to the fact that the electromagnetic field propagation is the same either in transmission or in reception.

In fact, the electromagnetic field increases by about 3-5 dB by introducing the metallic reflector (simulation of a 2 elements yegi aerial), whereas for frequencies of about 1800 MHz it could be suggested a surface comer-reflect aerial, preferably at 180°, which increases the signal by about 3-9 dB, with the consequent diminution of emitted power from the regulator.

The regulator sees in the aerial (for the same distance to the base station) a higher signal which equals the gain (about 3-9 dB), consequently the power transmitted by the regulator is decreased.

Therefore the system regulator-metallic shield instead of absorbing the electromagnetic waves utilises them

Figure 1    Circuitry with final power amplifier at discrete levels

Figure 2    examples for power amplifier at discrete levels

Figure 3    Layout of a cellular telephone

Figure 4    Cellular telephone with directional aerial (i.e microstrip).

Figure 5    Telephone case with a metallic shield

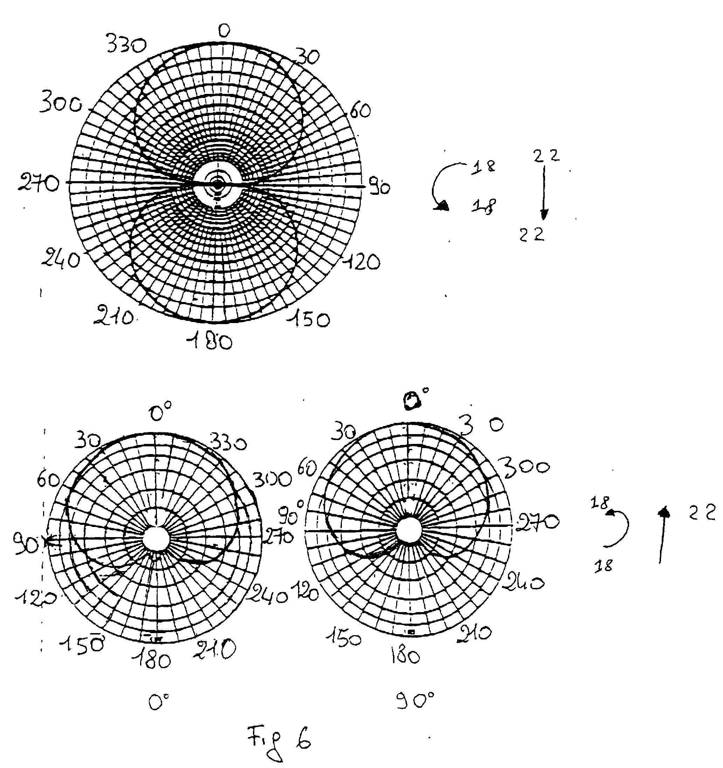

Figure 6    Diagram of propagation electromagnetic waves (normalised at 1) in reception (above), in transmission (below)

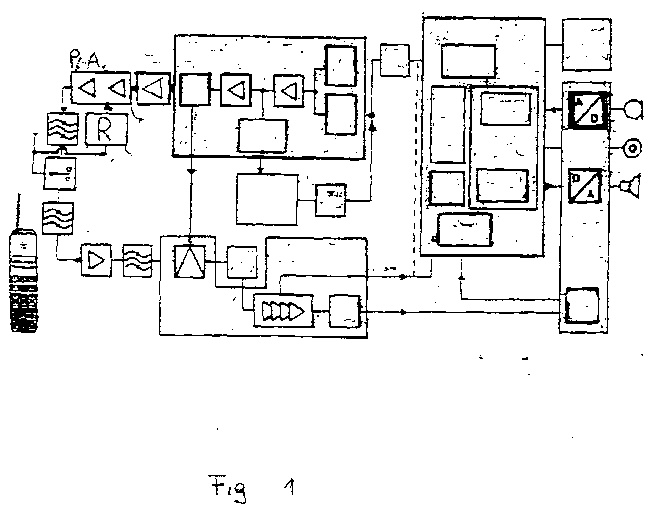

Figure 1 reports a block scheme of a cellular telephone in which a final power amplifier at discrete levels has been introduced.

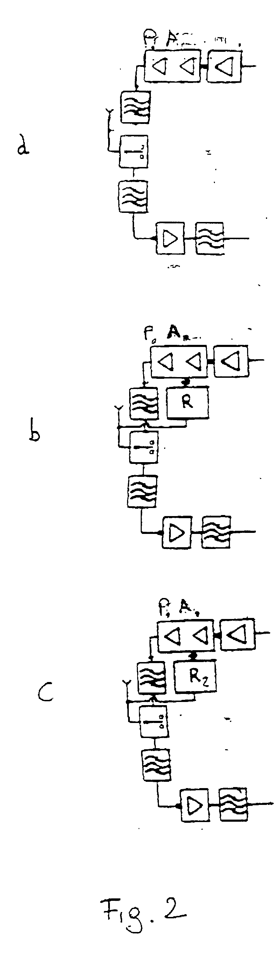

Figure 2 illustrates examples of a final power amplifier. The power amplifier of figure 2a amplifies the output signal from transmitter through a filter power amplifier at the maximum output power as function of the class to which it belongs to (see table 1) and maintains it up to the end of the transmission. This amplifier maintains constant the output transmission power either for one channel either for all channels. therefore it is not adjustable as it occurs with the following configurations.

Table 1

| Power level | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| dB | 13 | 11 | 9 | 7 | 5 | 3 | 1 | -1 | -3 | -5 | -7 | -9 | -11 | -13 |
| dBm | 43 | 41 | 39 | 37 | 35 | 33 | 31 | 29 | 27 | 25 | 23 | 21 | 19 | 17 |
| Watt | 20 | 12.6 | 8.0 | 5 | 3 2 | 2 0 | 1.26 | 0 80 | 0 5 | 0 32 | 0.20 | 0.13 | 0.06 | 0 05 |

In the block scheme of figure 2b a power regulator (R) similar to that of figure 2a is illustrated. This regulator analyses the power level received on the aerial and originated by the base station. During signal reception the regulator (R)measures the intensity and the quality of the signal and transfers this information to the base station through a dedicated channel. The base station assesses or not a power level change to the mobile station, in other words the base station allocates, during connection, the mobile station at the minimum useful power. This is the lower power for maintaining the communication between mobile phone and base station.

The block scheme of illustration 2c utilises the principle already expressed in scheme of figure 2b. In this case the regulator amplifies the signal of all channels as a function of the signal received by each input channel. This amplification changes with the time on the same modulated frequency. Thus this change permits the control on the final amplifier shown in figure 1 with the addition of a transmission system of a adjustable power as a function of the signal received. In use the regulator measures the power on the aerial dedicated to temporal channel; the regulator pilots the discrete amplifier at the minimum power to maintain the communication.

This system regulator /metallic shield permits to reduce at the minimum possible the electromagnetic field irradiated on a person, because instead of introducing a physical shield which would hinder the electromagnetic field (classic dispersion or absorption), it induces a emitted-field diminution caused by the amplifier due to active function of the field. A classic dipolar aerial adopted in a cellular phone has a gain of about 1.5 to 2.4 (compared to an isotropic aerial) equal 3 dB. With the combination power-amplifier/shield according to the invention we have a directive aerial with a gain about 6-12 dB, thus a gain of about 10 times with respect to a standard aerial. The system metallic-reflector/ regulator induces a directional propagation of the electromagnetic field, which causes a lower electromagnetic power emitted in the direction of the head.

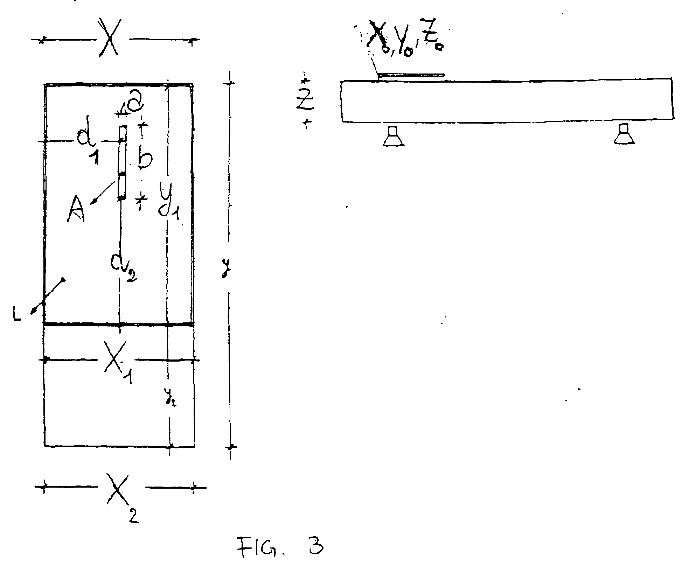

Figure 3 sketches a cellular telephone according to the present invention. A reflecting shield L of metallic material is positioned on the back of cellular phone between the earphone/microphone and the dipole aerial. The aerial A irradiates in the opposite side of that of the earphone/microphone of the cellular phone, thus opposite to the head of the user, in order to reduce the exposure to electromagnetic radiations. The aerial A can have different shapes and relative sizes, or can have natural or loaded length, and it is located in the half space originated from metallic shield opposite to the earphone/microphone.

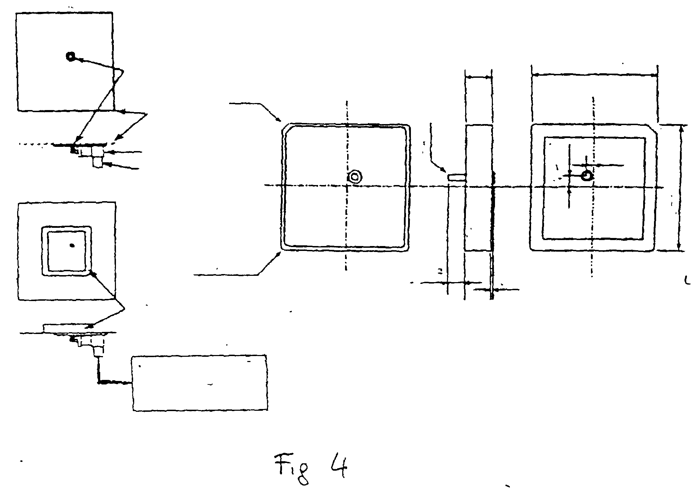

Figure 4 elucidates a cellular telephone according to the present invention, in which the dipole aerial A is replaced by a microstrip aerial.

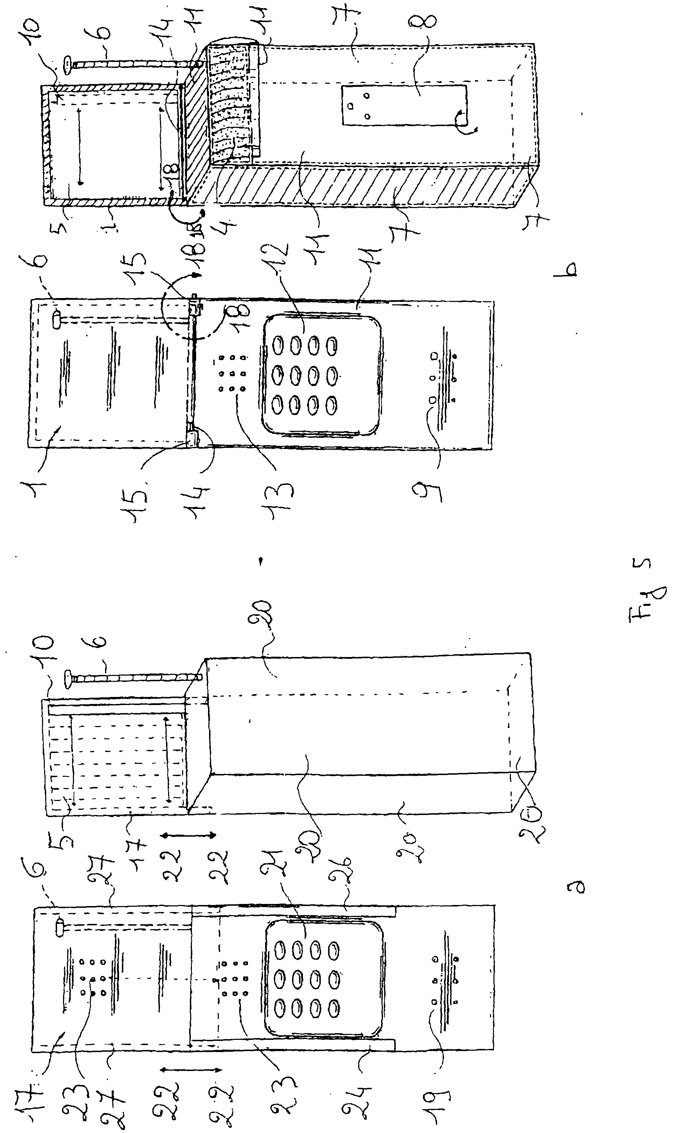

To cellular telephones without protection metallic shield the present invention foresees an embodiment in the shape of a telephone-case (11) to be applied at the telephone (figures 5a and 5b) of various material, preferably of leather, which covers the telephone and ties it with Velcro hooks (4) (figure 5b). The telephone-case, made of a thin membrane, enwraps the telephone. The diminution of electromagnetic fields takes place through a 180° rotating shield (18). This shield is made of metal (5), preferably of of low electric resistance (aluminium, copper), and is applied near the microphone (13), where the user usually listens the communication; this shield rotates of 180° around the pivot (14) and interposes itself during a phone communication between the aerial and head. In figure (5a) there is another way of construction of the telephone-case, here the shield slides on guides (22), preferably the case is mechanically rigid. The phone-case according to the embodiment of figures 5a-5b can be applied either to the construction of a cellular phone or to protect phones without the protection according to the invention.

Said phone-case can be advantageously applied to radio-mobile systems which have already a power-regulator as a function of the input signal; it permits to keep the minimum power of the mobile phone for maintaining the communication with the base station.

The shielding effect produces a directionally irradiated electromagnetic field and a diminution of electromagnetic field toward the human head (illustrations 6b-6c). A problem to the transmission arises when the directionally irradiated electromagnetic field rotates around his own axle, the communication with the base station could be interrupted and the protection is useless.

This problem is solved by the automatic power control in transmission formerly illustrated, which has a range of power adaptation of about 16 dB. This feature of the system according to the invention excludes this problem.

Without power regulation the protection would be useless, because it would generate a radiation diagram too unstable and distorted in the space and in the time, which would damage the communication of cellular system.

Advantageously, the electromagnetic field irradiated on the head is capitalised on i.e. is not absorbed or dispersed like the case of carbon shield; the regulator has the task of controlling this process.

The synergetic effect of the regulator-shield allows the proper functioning of the system.

Considering that the system could need adaptation, we can affirm that the system regulation of power/metallic shielding applied to DECT or DCS or GSM or any other standard TDMA (users divided into time)or CDMA or FDMA or other permits to reduce the number of base stations in order to cover a given area, because the variable power permits to extend cell size without causing critical exposition at the electromagnetic field. In the other way, the system reduces the costs compatibility with the electromagnetic stress.

## Claims

1. A cellular telephone comprising:

   a) A final power amplifier at discrete levels for all temporal input channels, that in use amplifies the signal for each channel as a function of the electromagnetic signal received on the aerial through a regulator (R), which in use analyses the transmitter field and adjusts the power, in the way that in use the final power amplifier maintains the output signal of minor intensity in the transmitted band.

   b) A transmission power amplifier which in use operates for the temporal devoted channels, such that the communication is maintained in reception/transmission at the lowest power level.

   c) A metallic shield situated between the aerial and the earphone-microphone.

2. A Cellular telephone according to claim 1 characterised in that the metallic shield situated between the aerial and the earphone-microphone is a reflector aerial yegi.

3. Cellular telephone according claim 1 characterised in that the metallic shield situated between the aerial and the earphone-microphone is a panel, preferably at 180° in the aerial corner reflect.

4. Cellular telephone according to claim 1 characterised in that the aerial is a directive aerial with a field opposite at that generated by earphone-microphone, preferably a microstrip combined in the body of the telephone.

5. Cellular telephone according to claim 1 characterised in that the metallic shield situated between the aerial and the earphone-microphone has been assembled inside a telephone-case which is applied to telephones without protection and the shield in use interposes between the aerial and the earphone-microphone.

6. Cellular telephone according to claim 5 characterised in that the metallic shield is hinged on said telephone-case or slides on guides arranged on said telephone-case.

7. A method of reducing the absorption on the human body of electromagnetic power emitted from a cellular telephone during the communication in reception and transmission comprising:

   a) A final power amplifier at discrete levels for all temporal input channels, that amplifies the signal for each channel as a function of the electromagnetic signal received on the aerial through a regulator (R), which analyses the transmitter field and adjusts the power, in the way that the final power amplifier maintains the output signal of minor intensity in the transmitted band.

   b) A transmission power amplifier which operates for the temporal devoted channels, such that the communication is maintained in reception/transmission at the lowest power level.

   c) The introduction of a metallic shield situated between the aerial and the earphone-microphone

8. A method of reducing the absorption on the human body of electromagnetic power emitted from a cellular telephone during the communication in reception and transmission according to claim 7 in which the regulator (R) tunes the amplification of each of the discrete levels of the temporal channels in output at different power-levels as a function of the signal received by the aerial.

9. Use in a cellular telephone of the combination of:

a) A final power amplifier at discrete levels for all temporal input channels, that amplifies the signal for each channel as a function of the electromagnetic signal received on the aerial through a regulator (R), which analyses the transmitter field and adjusts the power, in the way that the final power amplifier maintains the output signal of minor intensity in the transmitted band.

b) A transmission power amplifier which operates for the temporal devoted channels, such that the communication is maintained in reception/transmission at the lowest power level.

c) The introduction of a metallic shield situated between the aerial and the earphone-microphone

Fig 1

Fig. 2

FIG. 3

Fig 4

Fig 5

EP 0 942 527 A2

Fig 6